(19) Europäisches Patentamt
European Patent Office
Office européen des brevets

(11) **EP 4 394 802 A1**

(12) # EUROPEAN PATENT APPLICATION
published in accordance with Art. 153(4) EPC

(43) Date of publication:
**03.07.2024 Bulletin 2024/27**

(21) Application number: **22915014.9**

(22) Date of filing: **29.12.2022**

(51) International Patent Classification (IPC):
**H01B 5/02** (2006.01)  **H01R 25/16** (2006.01)
**B60L 50/64** (2019.01)  **H01B 1/02** (2006.01)

(52) Cooperative Patent Classification (CPC):
**B60L 50/64; H01B 1/02; H01B 5/02; H01R 25/16;**
**Y02E 60/10**

(86) International application number:
**PCT/CN2022/143231**

(87) International publication number:
**WO 2023/125764 (06.07.2023 Gazette 2023/27)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **31.12.2021  CN 202111675703**

(71) Applicant: **BYD Company Limited**
**Shenzhen, Guangdong 518118 (CN)**

(72) Inventors:
• **ZHU, Liang**
  **Shenzhen, Guangdong 518118 (CN)**
• **GUO, Qiang**
  **Shenzhen, Guangdong 518118 (CN)**
• **WEN, Danhua**
  **Shenzhen, Guangdong 518118 (CN)**
• **DENG, Hong**
  **Shenzhen, Guangdong 518118 (CN)**

(74) Representative: **Arnold & Siedsma**
**Bezuidenhoutseweg 57**
**2594 AC The Hague (NL)**

(54) **CONDUCTIVE SHEET, CONDUCTIVE BAR AND VEHICLE ELECTRICAL CONNECTOR**

(57) A conductive sheet, a conductive strip, and an electrical connector for a vehicle are disclosed. The conductive sheet includes a conductive sheet body, the conductive sheet body is a flat ribbon structure, and the conductive sheet body satisfies the following condition:

$$\omega \in \{[1+(\eth-\eth_0)/\eth]\eth_0/k(\delta+8)], \ 50[1+(\eth-\eth_0)/\eth]\eth_0/k(\delta+8)]\}$$

$\omega$ is the width of the conductive sheet body, measured in mm.
$\delta$ represents the thickness of the conductive sheet body, measured in mm.
$\eth$ represents a standard conductivity percentage of a pure copper material, and has a value of 100% IACS.
$\eth_0$ represents a conductivity percentage of the conductive sheet body, measured in % IACS.
$k$ is 1.07% IACS/mm$^2$.
The conductivity percentage of the conductive sheet body is 55% IACS to 80% IACS.

**(Cont. next page)**

EP 4 394 802 A1

FIG. 1

**Description**

## CROSS-REFERENCE TO RELATED APPLICATIONS

This application claims priority to Chinese Patent Application No. 202111675703.0, filed on December 31, 2021 and entitled "CONDUCTIVE SHEET, CONDUCTIVE STRIP, AND ELECTRICAL CONNECTOR FOR VEHICLE". The entire content of the above-referenced application is incorporated herein by reference.

## FIELD

The present disclosure relates to the technical field of automotive electrical equipment, and more specifically, to a conductive sheet, a conductive strip, and an electrical connector for a vehicle.

## BACKGROUND

With the development of new energy vehicles, the requirements for battery conductive strips are gradually increasing. For example, existing new energy vehicles are mainly developing towards lightweight design, but existing conductive strips have a high specific gravity. The use of an existing conductive strip in a vehicle increases the specific gravity and energy consumption of the vehicle, failing to meet the requirements of lightweight development of modern vehicles. In addition, after long-term use, the existing conductive strips are easily damaged and oxidized, leading to an increased contact resistance between the conductive strips and electrical connection terminals, and affecting the conductive performance of the conductive strips. Replacing the existing conductive strips with low-density and high-strength conductive strips is a way to improve the strength and stiffness of conductive strips. However, limited by the electrical conductivity, the existing low-density and high-strength conductive strips are mainly used in low current fields. Vehicles have high requirements for long-term current carrying, high-current bearing capacity, and heat dissipation efficiency of conductive strips. In addition, considering the cost and lightweight requirements of vehicles, the volume of conductive strips cannot be too large. However, the existing conductive strips cannot meet the above requirements at the same time. Therefore, there is an urgent need for a conductive strip that can meet the requirements on lightweight design, heat dissipation efficiency, and current bearing capacity at the same time.

## SUMMARY

To solve the problem that existing conductive strips cannot meet the requirements on high-current continuous conduction, heat dissipation, and lightweight design of new energy vehicles at the same time, the present disclosure provides a conductive sheet, a conductive strip, and an electrical connector for a vehicle.

In order to solve the above technical problem, in a first aspect, the present disclosure provides a conductive sheet, including a conductive sheet body. The conductive sheet body has a flat ribbon structure, and the conductive sheet body satisfies the following condition:

$$\omega \in \{[1+(\eth-\eth_0)/\eth]\eth_0/k(\delta+8)], \ 50[1+(\eth-\eth_0)/\eth]\eth_0/k(\delta+8)]\}$$

$\omega$ represents the width of the conductive sheet body, measured in mm.

$\delta$ represents the thickness of the conductive sheet body, measured in mm.

$\eth$ represents a standard conductivity percentage of a pure copper material, and has a value of 100% IACS.

$\eth_0$ represents a conductivity percentage of the conductive sheet body, measured in % IACS.

k is 1.07% IACS/mm$^2$.

The conductivity percentage of the conductive sheet body is 55% IACS to 80% IACS.

In some implementations, the conductive sheet body is a ribbon structure extending along a straight line or a ribbon structure extending along a broken line.

In some implementations, the conductive sheet body includes a first terminal connection section, an extension section, a transition section, and a second terminal connection section that are integrally formed. The first terminal connection section is located at one end of the extension section, and the first terminal connection section and the extension section are connected at an angle of 45° to 135°. The second terminal connection section and the extension section are arranged side by side in a staggered manner. The transition section is connected between an end of the second terminal connection section and another end of the extension section, and the transition section and the extension section are connected at an angle of 45° to 135°.

In some implementations, connection positions between the first terminal connection section, the extension section, the transition section, and the second terminal connection section are all arranged as rounded corners.

In some implementations, the extension section is provided with a positioning hole, the first terminal connection section is provided with a first connecting hole, and the second terminal connection section is provided with a second connecting hole.

In some implementations, a positioning groove is provided on a side of the second terminal connection section.

In some implementations, the surface of the conductive sheet body is provided with a copper layer and a nickel layer. The copper layer is located on the surface of the conductive sheet body, and the nickel layer is located on a surface of the copper layer that faces away from the conductive sheet body.

In some implementations, the copper layer has a thickness of 10 $\mu$m to 30 $\mu$m, and the nickel layer has a thickness of 4 $\mu$m to 20 $\mu$m.

In some implementations, the copper layer and the nickel layer are applied on the conductive sheet body through electroplating.

In some implementations, the nickel layer has a conductivity percentage greater than 58% and a peel strength of 30N/mm.

In some implementations, the surface of the conductive sheet body further includes an insulating coating, and the insulating coating is located on a surface of the nickel layer that faces away from the conductive sheet body.

In some implementations, the insulating coating has a thickness of 0.2 mm to 0.7 mm.

In some implementations, the conductive sheet body is selected from one or more of aluminum, aluminum alloy, magnesium, magnesium alloy, iron, ferroalloy, nickel, or nickel alloy.

In some implementations, the conductive sheet body includes the following components in mass percentages: Mg: 0.02% to 0.85%; Si: 0.01% to 0.41%; B: 0.01% to 0.04%; Fe: 0.01% to 0.062%; Zn: 0 to 0.0096%; Ti: 0 to 0.0096%; V: 0 to 0.001%; Al: 98.52% to 99.95%; and other elements: less than 0.1%.

In a second aspect, the present disclosure provides a conductive strip, which is obtained by bending the conductive sheet described above.

In a third aspect, the present disclosure provides an electrical connector for a vehicle. The electrical connector includes one or more conductive strips as described above for connection between electrical devices inside the vehicle.

According to the conductive sheet provided in the present disclosure, the inventor finds, through a large number of experiments and simulation analysis, that a conductive sheet with high heat dissipation efficiency, high power density, and lightweight design can be obtained by adjusting the cross-sectional width, cross-sectional thickness, and conductivity percentage of the conductive sheet to satisfy the formula: $\omega \in \{[1+(\sigma - \sigma_0)/\sigma]\sigma_0/k(\delta+8)], \ 50[1+(\sigma - \sigma_0)/\sigma]\sigma_0/k(\delta+8)]\}$. The present disclosure can withstand a continuous DC current of 250 A or above under actual working conditions in a vehicle, with the temperature rise of electrical connection of conductive strips being less than or equal to 50K. The present disclosure is suitable for use in a continuous high-current conductive strip system for vehicles with a lifespan of at least 200,000 kilometers, which fills the gap in the field of conductive strip systems.

## BRIEF DESCRIPTION OF THE DRAWINGS

FIG. 1 is a schematic structural diagram of a conductive sheet according to an embodiment of the present disclosure;

FIG. 2 is a schematic structural diagram of a conductive strip according to another embodiment of the present disclosure;

FIG. 3 is a schematic structural diagram of a conductive strip according to still another embodiment of the present disclosure;

FIG. 4 is a schematic structural diagram of a conductive strip according to still another embodiment of the present disclosure;

FIG. 5 is a schematic structural diagram of a conductive strip according to still another embodiment of the present disclosure;

FIG. 6 is a schematic structural diagram of a conductive strip according to still another embodiment of the present disclosure;

FIG. 7 is a simulated temperature profile of a conductive strip according to Example 1 of the present disclosure;

FIG. 8 is a simulated temperature profile of a conductive strip according to Example 2 of the present disclosure;

FIG. 9 is a simulated temperature profile of a conductive strip according to Example 3 of the present disclosure;

FIG. 10 is a simulated temperature profile of a conductive strip according to Comparative Example 1 of the present disclosure;

FIG. 11 is a simulated temperature profile of a conductive strip according to Comparative Example 2 of the present disclosure;

FIG. 12 is a simulated temperature profile of a conductive strip according to Comparative Example 3 of the present disclosure;

FIG. 13 is a simulated temperature profile of a conductive strip according to Comparative Example 4 of the present disclosure;

FIG. 14 is a simulated temperature profile of a conductive strip according to Comparative Example 5 of the present disclosure; and

FIG. 15 is a schematic cross-sectional view of the conductive sheet in FIG. 1 along II'.

The reference numerals in the drawings of the specification are as follows:

1. first terminal connection section; 11. first connecting hole; 12. copper layer; 13. nickel layer; 14. insulating coating; 2. extension section; 21. positioning hole; 22. linear extension part; 23. bent part; 3. transition section; 4. second terminal connection section; 41. second connecting hole; 42. positioning groove; 10. conductive sheet; 20. conductive sheet body; 30. conductive strip.

## DETAILED DESCRIPTION

To make the technical problems to be solved by the present disclosure, technical solutions, and beneficial effects more comprehensible, the following further describes the present disclosure in detail with reference to the accompanying drawings and embodiments. It should be understood that, the specific embodiments described therein are merely used for explain the present disclosure instead of limiting the present disclosure.

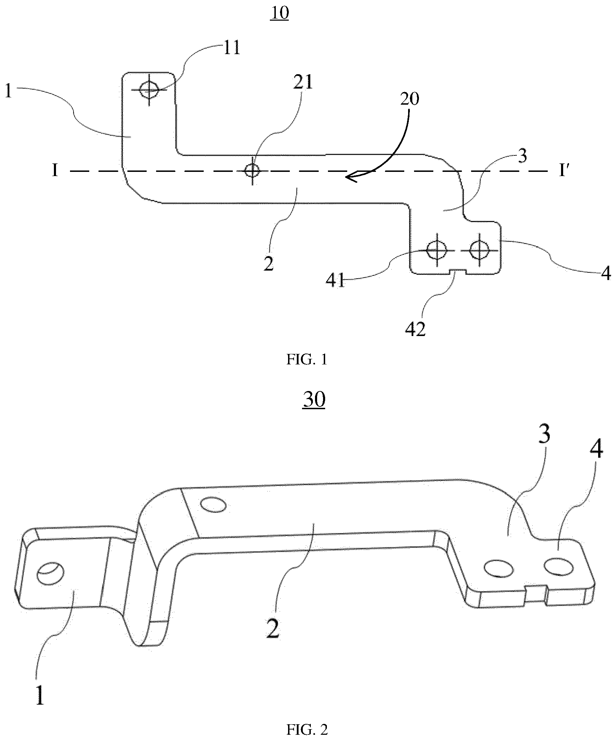

Refer to FIG. 1. An embodiment of the present disclosure provides a conductive sheet 10, including a conductive sheet body 20. The conductive sheet body 20 has a flat ribbon structure, and the conductive sheet body 20 satisfies the following condition:

$$\omega \in \{[1+(\eth-\eth_0)/\eth]\eth_0/k(\delta+8)], \, 50[1+(\eth-\eth_0)/\eth]\eth_0/k(\delta+8)]\}$$

$\omega$ represents the width of the conductive sheet body, measured in mm.

$\delta$ represents the thickness of the conductive sheet body, measured in mm.

$\eth$ represents the standard conductivity percentage of a pure copper material, and has a value of 100% IACS.

$\eth_0$ represents the conductivity percentage of the conductive sheet body, measured in % IACS.

k is 1.07% IACS/mm$^2$.

The conductivity percentage of the conductive sheet body is 55% IACS to 80% IACS.

The inventor finds, through a large number of experiments and simulation analysis, that a conductive sheet with high heat dissipation efficiency, high power density, and lightweight design can be obtained by adjusting the cross-sectional width, cross-sectional thickness, and conductivity percentage of the conductive sheet to satisfy the formula: $\omega \in \{[1+(\eth-\eth_0)/\eth]\eth_0/k(\delta+8)], \, 50[1+(\eth-\eth_0)/\eth]\eth_0/k(\delta+8)]\}$. The present disclosure can withstand a continuous DC current of 250 A or above under actual working conditions in a vehicle, with the temperature rise of electrical connection of conductive strips being less than or equal to 50K. The present disclosure is suitable for use in a continuous high-current conductive strip system for vehicles with a lifespan of at least 200,000 kilometers, which fills the gap in the field of conductive strip systems.

In the description of the present disclosure, the conductivity percentage of the conductive sheet body is a ratio of the electrical conductivity of the conductive sheet body to the standard electrical conductivity of the pure copper material, and is expressed in % IACS. The physical meaning of electrical conductivity is to express conductive performance of substances, and the electrical conductivity is the reciprocal of resistivity. Resistivity is a physical quantity used to express the resistance characteristics of substances. At normal temperature (20°C), the resistance of a wire made of a material with a length of 1 meter and a cross-sectional area of 1 square millimeter is taken as the resistivity of the material.

In 1913, the International Annealed Copper Standard determined the use of an annealed copper wire with a density of 8.89 g/cm$^3$, a length of 1 m, a mass of 1 g, and a resistance of 0.15328 ohms as the measurement standard. At 20 degrees Celsius, with the resistivity of the annealed copper wire being 1.7241 $\mu\Omega\cdot$cm (or the electrical conductivity being 58.0 MS/m), the standard conductivity percentage is determined to be 100% IACS (International Annealed Copper Standard). That is, the standard electrical conductivity of the pure copper material is 58.0 MS/m, and the standard conductivity percentage of the pure copper material is 100% IACS.

The conductivity percentage of the conductive sheet body is lower than that of copper. Specifically, the conductive sheet body may be one or more of aluminum, aluminum alloy, magnesium, magnesium alloy, iron, ferroalloy, nickel, nickel alloy, or the like. According to the foregoing formula, when the thickness δ of the conductive sheet body is determined, the range of the width ω of the conductive sheet body varies as materials with different conductivity percentages are used to make the conductive sheet body. An appropriate thickness δ and width ω of the conductive sheet body can be obtained according to the foregoing formula and the conductive sheet body with different conductivity percentages, thereby improving the heat dissipation performance of the conductive sheet without unduly increasing the volume.

In some embodiments, the conductive sheet body is a ribbon structure extending along a straight line or a ribbon structure extending along a broken line.

When the conductive sheet body is a ribbon structure extending along a straight line, the thickness of the conductive sheet body is an average thickness between two surfaces with the largest area of the conductive sheet body, and the width of the conductive sheet body is the width of a cross section perpendicular to an extending direction of the conductive sheet body.

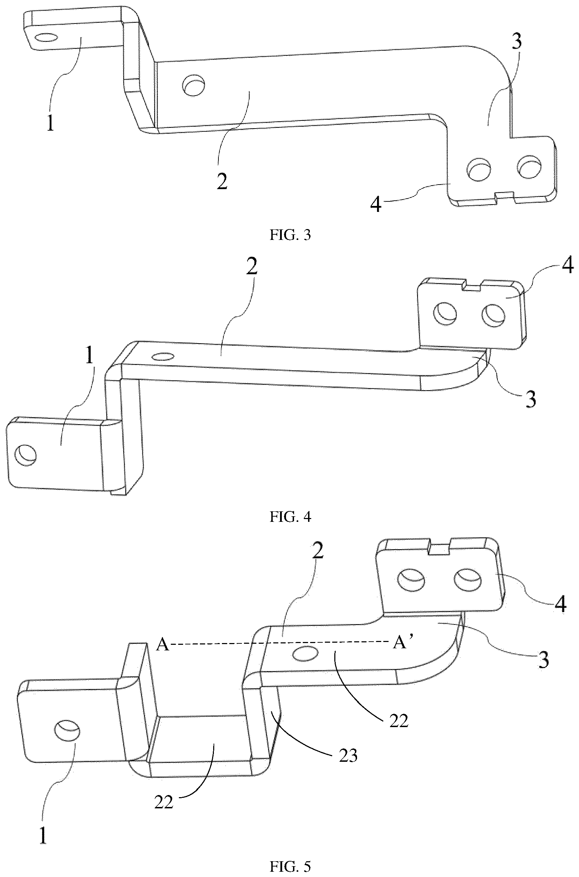

When the conductive sheet body is a ribbon structure extending along a broken line, the thickness of the conductive sheet body is an average thickness between two surfaces with the largest area of the conductive sheet body, and the width of the conductive sheet body includes only the width of a cross section of the linear extension part of the conductive sheet body, and does not include the width of a cross section of the bent part. Specifically, as shown in FIG. 5, the extension section 2 includes a linear extension part 22 and a bent part 23. The width of the conductive sheet body 20 is the width of a cross section of the linear extension part 22 that is perpendicular to the extension direction AA'.

As shown in FIG. 1, in some embodiments, the conductive sheet body 20 includes a first terminal connection section 1, an extension section 2, a transition section 3, and a second terminal connection section 4 that are integrally formed. The first terminal connection section 1 is located at one end of the extension section 2, and the first terminal connection section 1 and the extension section 2 are connected at an angle of 45° to 135°. The second terminal connection section 4 and the extension section 2 are arranged side by side in a staggered manner. The transition section 3 is connected to the second terminal connection section 4 and another end of the extension section 2 separately, and the transition section 3 and the extension section 2 are connected at an angle of 45° to 135°.

In some embodiments, the first terminal connection section 1 and the extension section 2 are perpendicular to each other, the second terminal connection section 4 and the extension section 2 are parallel to each other, and the transition section 3 and the extension section 2 are perpendicular to each other.

The first terminal connection section 1 and the second terminal connection section 4 are respectively used for installing and fastening two conductive terminals. The extension section 2 and the transition section 3 are electrical connection structures between the first terminal connection section 1 and the second terminal connection section 4. The lengths of the extension section 2 and the transition section 3 can be adjusted according to the distance between the two conductive terminals, and the extension section 2 and/or the transition section 3 can be bent once or several times according to relative spatial positions of the two conductive terminals, to adapt to different application scenarios.

In some embodiments, connection positions between the first terminal connection section 1, the extension section 2, the transition section 3, and the second terminal connection section 4 are all arranged as rounded corners.

Providing rounded corners can ensure the safety during use and installation of the conductive sheet body, and prevent sharp corners from scratching the installer. In addition, rounded corners are less prone to creepage than right angles, thereby avoiding tip discharge and improving the use safety.

In some embodiments, the extension section 2 is provided with a positioning hole 21, the first terminal connection section 1 is provided with a first connecting hole 11, and the second terminal connection section 4 is provided with a second connecting hole 41.

The positioning hole 21 is used for positioning and stabilizing the conductive sheet body to ensure the precise alignment and stable connection between the first terminal connection section 1 and the second terminal connection section 4 and the conductive terminals. The first connecting hole 11 and the second connecting hole 41 are used for connecting pieces to be inserted and fixedly connected to the conductive terminals. The connecting pieces may be screws or bolts.

In some embodiments, a positioning groove 42 is provided on a side of the second terminal connection section 4.

The positioning groove 42 is used for positioning the second terminal connection section 4, so that the second connecting hole and a connecting hole of the conductive terminal are accurately aligned.

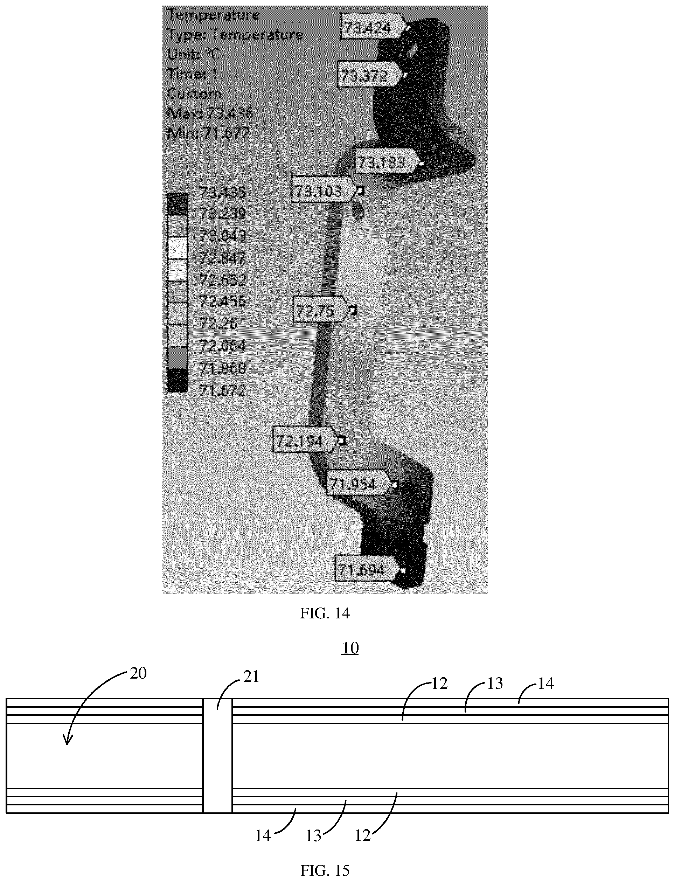

As shown in FIG. 15, FIG. 15 is a schematic cross-sectional view of the conductive sheet in FIG. 1 along II'. In some embodiments, the surface of the conductive sheet body 20 is provided with a copper layer 12 and a nickel layer 13. The copper layer 12 is located on the surface of the conductive sheet body 20, and the nickel layer 13 is located on a surface of the copper layer 12 that faces away from the conductive sheet body 20.

The copper layer 12 and the nickel layer 13 can be applied on the conductive sheet body 20 through electroplating, and the copper layer 12 plays a role in improving the adhesion between the conductive sheet body 20 and the nickel layer 13, to prevent the nickel layer from falling off. The nickel layer 13 improves the surface hardness and abrasion resistance of the conductive sheet body and prevents corrosion and oxidation of the conductive sheet body 20, thereby preventing the electric connection effect from being affected due to surface oxidation of the conductive sheet body 20. The conductivity percentage of the nickel layer 13 is above 58% IACS, and the peel strength is 30 N/mm, which effectively improves the ability of the conductive sheet body 20 to resist salt spray and impact of 85°C, 85% humidity, low temperature of -40°C, and high temperature of 125°C. The peel strength is the maximum force required for peeling the bonded materials from the contact surface per unit width.

In some embodiments, the copper layer has a thickness of 10 $\mu$m to 30 $\mu$m, and the nickel layer 13 has a thickness of 4 $\mu$m to 20 $\mu$m.

In some embodiments, the surface of the conductive sheet body further includes an insulating coating 14 located on a surface of the nickel layer 13 that faces away from the conductive sheet body, and the insulating coating 14 has a thickness of 0.2 mm to 0.7 mm.

In some embodiments, the insulating coating 14 may include an epoxy resin layer, which is obtained by spraying and curing epoxy resin paint on the surface of the nickel layer 13 that faces away from the conductive sheet body 20. The insulating coating 14 can effectively increase a creepage distance and electrical clearance of the conductive sheet body 20, achieving a withstand voltage of 3000 V (AC), a leakage current of less than 3 mA in 60 seconds, an insulation resistance greater than 1000 V (DC), and a leakage insulation resistance greater than 200 m$\Omega$ in 60 seconds.

In some embodiments, the conductive sheet body 20 is an aluminum alloy material, and the use of the aluminum alloy material can completely replace copper conductive strips in the vehicle conductive strip system. Under the formula provided in the present disclosure, compared with the copper conductive strips, the aluminum alloy material can not only achieve the same electrical connection performance, but also has the advantages of light weight and low material cost. The material density of the aluminum alloy material is only 30% of that of copper, which is beneficial to reduce the weight and energy consumption of the vehicle to improve the mile range of the vehicle.

In some embodiments, the conductive sheet body includes the following components in mass percentages: Mg: 0.02% to 0.85%; Si: 0.01% to 0.41%; B: 0.01% to 0.04%; Fe: 0.01% to 0.062%; Zn: 0 to 0.0096%; Ti: 0 to 0.0096%; V: 0 to 0.001%; Al: 98.52% to 99.95%; and other elements: less than 0.1%.

Si and Fe can form AlSiFe and Al$_3$Fe reinforcing phase in aluminum alloy, thereby improving the strength of the conductive sheet body. By controlling Si and Fe in the above range, the strength of aluminum alloy can be improved and the impact on the conductive performance of aluminum alloy can be avoided.

The addition of B element plays a role in refining the grains. In addition, during the melting process, insoluble compounds formed by some B elements and alloy impurities precipitate from the solid solution, thus reducing lattice deformation, lowering resistivity, and improving the conductive performance of aluminum alloy.

Through element selection, the conductive sheet body can have good conductive performance and mechanical performance. Specifically, the comprehensive performance of the conductive sheet body meets the requirements including a conductivity percentage of greater than or equal to 60% IACS, a yield strength of greater than or equal to 60 MPa, a tensile strength of greater than or equal to 110 MPa, and no cracking on the surface during 90-degree bending (1t).

Some embodiments of the present disclosure provide a conductive strip 30 obtained by bending the conductive sheet described above.

In some embodiments, the conductive strip 30 may be bent in different ways.

As shown in FIG. 2, in some embodiments, an end of the extension section 2 that is close to the first terminal connection section 1 is bent 90 degrees downward, and the first terminal connection section 1 is bent 90 degrees to the left relative to the extension section 2.

As shown in FIG. 3, in some embodiments, an end of the extension section 2 that is close to the first terminal connection section 1 is bent 90 degrees upward, and the first terminal connection section 1 is bent 90 degrees to the left relative to the extension section 2.

As shown in FIG. 4, in some embodiments, the second terminal connection section 4 is bent upward by 90 degrees relative to the transition section 3, an end of the extension section 2 that is close to the first terminal connection section 1 is bent downward by 90 degrees, and the first terminal connection section 1 is bent leftward by 90 degrees relative to the extension section 2.

As shown in FIG. 5, in some embodiments, the second terminal connection section 4 is bent 90 degrees upward relative to the transition section 3, and the extension section 2 has three bending points. The extension section 2 is bent 90 degrees downward, 90 degrees left, and 90 degrees upward in turn in the direction from the transition section 3 to the first terminal connection section 1. The first terminal connection section 1 is bent 90 degrees left relative to the extension section 2.

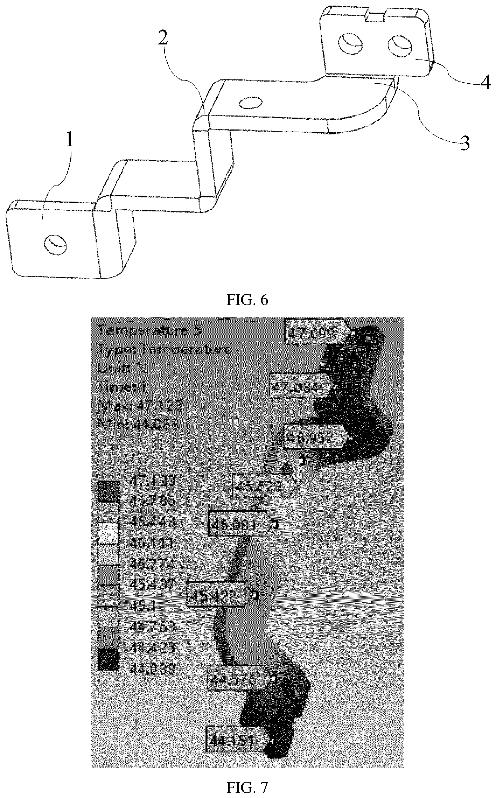

As shown in FIG. 6, in some embodiments, the second terminal connection section 4 is bent 90 degrees upward relative to the transition section 3, and the extension section 2 has three bending points. The extension section 2 is bent 90 degrees downward, 90 degrees left, and 90 degrees downward in turn in the direction from the transition section 3 to the first terminal connection section 1. The first terminal connection section 1 is bent 90 degrees left relative to the extension section 2.

In the description of the present disclosure, it should be understood that orientation or position relationships indicated by the terms such as "up", "down", "left", "right", and the like are based on orientation or position relationships shown in the accompanying drawings, and are used only for ease and brevity of description of the present disclosure, rather than indicating or implying that the mentioned apparatus or component needs to have a particular orientation or needs to be constructed and operated in a particular orientation. Therefore, such terms should not be construed as limiting of the present disclosure.

In some embodiments, the preparation process of the conductive strip 30 is as follows: sheet metal → soaking → preheating → solution quenching → aging treatment → feeding → cutting → primary molding → secondary molding → riveting → grinding → polishing → sandblasting → electroplating → full inspection.

In some embodiments, a temperature range of solution quenching is 520°C to 530°C, and a time range of solution quenching is 15 min to 25 min. A temperature range of aging treatment is 190°C to 195°C, and a time range of aging quenching is 27 h to 33 h.

Other embodiments of the present disclosure provide an electrical connector for a vehicle. The electrical connector for the vehicle includes one or more conductive strips 30 as described above for connection between electrical devices inside the vehicle.

In the electrical connector for the vehicle, the conductive strips 30 are suitable for series or parallel assembly, for single-layer and multi-layer conductive strips 30, and for different numbers of connection structures, and have smaller volume and lighter weight while satisfying the current carrying capacity. The use of the above-mentioned conductive strip 30 for interconnection of electrical devices inside the vehicle can implement a multi-layer spatial three-dimensional layout, providing a novel conductive composite system for vehicles that has a compact structure and high space utilization rate and that is more convenient for production, installation, and disassembly.

The following further describes the present disclosure through embodiments.

Example 1

This embodiment provides a conductive strip, the structure of which is shown in FIG. 2. The conductive strip includes a conductive sheet body, the conductive sheet body adopts aluminum alloy, and the conductive sheet body includes a first terminal connection section, an extension section, a transition section, and a second terminal connection section that are integrally formed. The first terminal connection section is located at one end of the extension section, and the first terminal connection section is perpendicular to the extension section. The second terminal connection section and the extension section are arranged side by side in a staggered manner, the transition section is connected to the second terminal connection section and another end of the extension section separately, and the transition section is perpendicular to the extension section.

Parameters of the conductive sheet body are shown in Table 1.

**Table 1**

| Width of the conductive sheet body $\omega$/mm | Thickness of the conductive sheet body $\delta$/mm | Conductivity percentage of the conductive sheet body $\sigma_0$ /% IACS |
|---|---|---|
| 25 | 5 | 60 |

Example 2

This embodiment is used to describe the conductive strip disclosed in the present disclosure including most of the structures in Example 1 with the difference in the parameters of the conductive sheet body as shown in Table 2.

**Table 2**

| Width of the conductive sheet body $\omega$/mm | Thickness of the conductive sheet body $\delta$/mm | Conductivity percentage of the conductive sheet body $\sigma_{0\ 0}$/% IACS |
|---|---|---|
| 25 | 4 | 64 |

Example 3

This embodiment is used to describe the conductive strip disclosed in the present disclosure including most of the structures in Example 1 with the difference in the parameters of the conductive sheet body as shown in Table 3.

Table 3

| Width of the conductive sheet body $\omega$/mm | Thickness of the conductive sheet body $\delta$/mm | Conductivity percentage of the conductive sheet body $_0$/% IACS |
|---|---|---|
| 20 | 6 | 58 |

Comparative Example 1

This comparative example is used for providing a comparative illustration of the conductive strip disclosed in the present disclosure including most of the structures in Example 1 with the difference in the parameters of the conductive sheet body as shown in Table 4.

Table 4

| Width of the conductive sheet body $\omega$/mm | Thickness of the conductive sheet body $\delta$/mm | Conductivity percentage of the conductive sheet body $\sigma_{0\ 0}$/% IACS |
|---|---|---|
| 6 | 5 | 60 |

Comparative Example 2

This comparative example is used for providing a comparative illustration of the conductive strip disclosed in the present disclosure including most of the structures in Example 1 with the difference in the parameters of the conductive sheet body as shown in Table 5.

Table 5

| Width of the conductive sheet body $\omega$/mm | Thickness of the conductive sheet body $\delta$/mm | Conductivity percentage of the conductive sheet body $\sigma_{0\ 0}$/% IACS |
|---|---|---|
| 7 | 3 | 64 |

Comparative Example 3

This comparative example is used for providing a comparative illustration of the conductive strip disclosed in the present disclosure including most of the structures in Example 1 with the difference in the parameters of the conductive sheet body as shown in Table 6.

Table 6

| Width of the conductive sheet body $\omega$/mm | Thickness of the conductive sheet body $\delta$/mm | Conductivity percentage of the conductive sheet body $\sigma_{0\ 0}$/% IACS |
|---|---|---|
| 5.5 | 4 | 58 |

Comparative Example 4

This comparative example is used for providing a comparative illustration of the conductive strip disclosed in the present disclosure including most of the structures in Example 1 with the difference in the parameters of the conductive sheet body as shown in Table 7.

**Table 7**

| Width of the conductive sheet body $\omega$/mm | Thickness of the conductive sheet body $\delta$/mm | Conductivity percentage of the conductive sheet body $\sigma_0$ /% IACS |
|---|---|---|
| 25 | 4 | 45 |

Comparative Example 5

This comparative example is used for providing a comparative illustration of the conductive strip disclosed in the present disclosure including most of the structures in Example 1 with the difference in the parameters of the conductive sheet body as shown in Table 8.

**Table 8**

| Width of the conductive sheet body $\omega$/mm | Thickness of the conductive sheet body $\delta$/mm | Conductivity percentage of the conductive sheet body $\sigma_0$ /% IACS |
|---|---|---|
| 20 | 5 | 38 |

Performance test

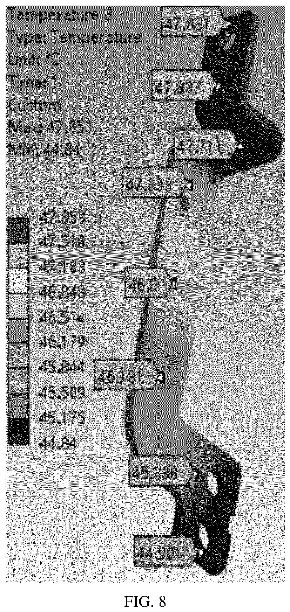

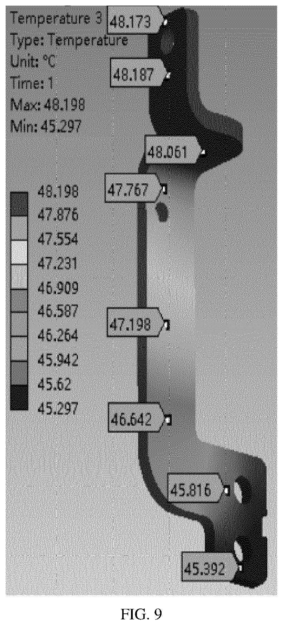

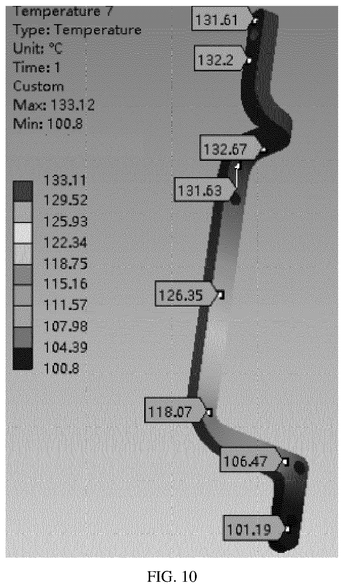

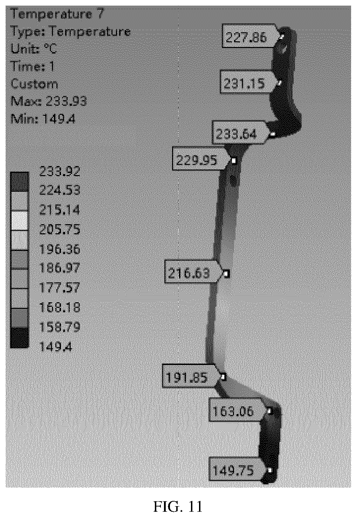

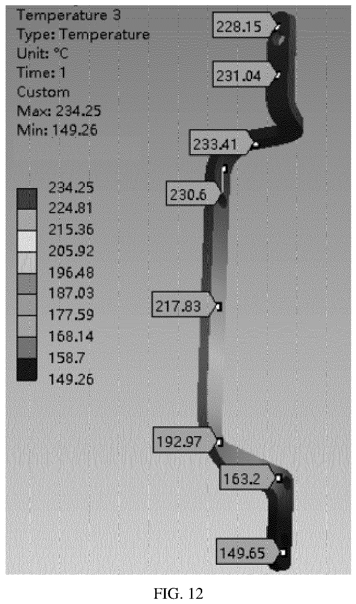

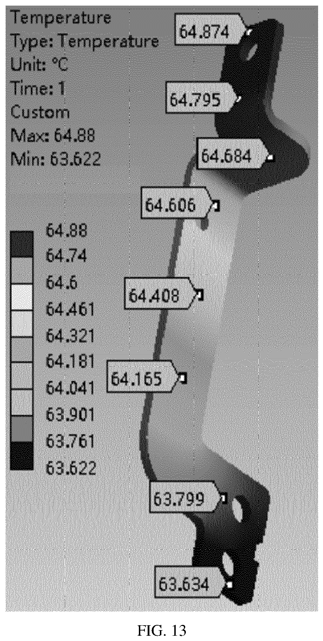

A simulation test is carried out on the conductive strips provided above. The test result obtained in Example 1 is shown in FIG. 7, the test result obtained in Example 2 is shown in FIG. 8, the test result obtained in Example 3 is shown in FIG. 9, the test result obtained in Comparative Example 1 is shown in FIG. 10, the test result obtained in Comparative Example 2 is shown in FIG. 11, the test result obtained in Comparative Example 3 is shown in FIG. 12, the test result obtained in Comparative Example 4 is shown in FIG. 13, and the test result obtained in Comparative Example 5 is shown in FIG. 14.

Test results of highest junction temperatures of the conductive strips are filled in Table 9.

**Table 9**

| Group | Example 1 | Example 2 | Example 3 | Comparative Example 1 | Comparative Example 2 | Comparative Example 3 | Comparative Example 4 | Comparative Example 5 |
|---|---|---|---|---|---|---|---|---|
| Junction temperature/°C | 47.123 | 47.853 | 48.198 | 133.12 | 233.93 | 234.25 | 64.880 | 73.436 |

As can be seen from the test results in FIG. 7 to FIG. 14 and Table 9, the conductive strips obtained in Example 1 to Example 3 defined by the relational expression of the present disclosure have lower temperatures under a high-current working condition, can meet the requirements on current carrying capacity and temperature rise, and have a better heat dissipation effect. In addition, the conductive strip has smaller volume and lighter weight.

The foregoing descriptions are merely exemplary embodiments of the present disclosure, and are not intended to limit the present disclosure. Any modification, equivalent replacement, or improvement made within the spirit and principle of the present disclosure shall fall within the protection scope of the present disclosure.

**Claims**

1.  A conductive sheet (10), comprising a conductive sheet body (20), the conductive sheet body (20) having a flat ribbon structure, and the conductive sheet body (20) satisfying the following condition:

$$\omega \in \{[1+(\eth-\eth_0)/\eth]\eth_0/k(\delta+8)], \ 50[1+(\eth-\eth_0)/\eth]\eth_0/k(\delta+8)]\}$$

    wherein $\omega$ represents a width of the conductive sheet body (20), measured in mm;
    $\delta$ represents a thickness of the conductive sheet body (20), measured in mm;

    $\eth$ represents a standard conductivity percentage of a pure copper material, and has a value of 100% IACS;

    $\eth_0$ represents a conductivity percentage of the conductive sheet body (20), measured in % IACS;
    k is 1.07% IACS/mm$^2$; and
    the conductivity percentage of the conductive sheet body (20) is 55% IACS to 80% IACS.

2.  The conductive sheet (10) according to claim 1, wherein the conductive sheet body (20) is a ribbon structure extending along a straight line or a ribbon structure extending along a broken line.

3.  The conductive sheet (10) according to claim 1 or 2, wherein the conductive sheet body (20) comprises a first terminal connection section (1), an extension section (2), a transition section (3), and a second terminal connection section (4) that are integrally formed, the first terminal connection section (1) is located at one end of the extension section (2), the first terminal connection section (1) and the extension section (2) are connected at an angle of 45° to 135°, the second terminal connection section (4) and the extension section (2) are arranged side by side in a staggered manner, the transition section (3) is connected between an end of the second terminal connection section (4) and another end of the extension section (2), and the transition section (3) and the extension section (2) are connected at an angle of 45° to 135°.

4.  The conductive sheet (10) according to claim 3, wherein connection positions between the first terminal connection section (1), the extension section (2), the transition section (3), and the second terminal connection section (4) are all arranged as rounded corners.

5.  The conductive sheet (10) according to claim 3 or 4, wherein the extension section (2) is provided with a positioning hole (21), the first terminal connection section (1) is provided with a first connecting hole (11), and the second terminal connection section (4) is provided with a second connecting hole (41).

6.  The conductive sheet (10) according to any one of claims 3 to 5, wherein a positioning groove (42) is provided on a side of the second terminal connection section (4).

7.  The conductive sheet (10) according to any one of claims 1 to 6, wherein the surface of the conductive sheet body (20) is provided with a copper layer (12) and a nickel layer (13), the copper layer (12) is located on a surface of the conductive sheet body (20), and the nickel layer (13) is located on a surface of the copper layer (12) that faces away from the conductive sheet body (20).

8.  The conductive sheet (10) according to claim 7, wherein the copper layer (12) has a thickness of 10 $\mu$m to 30 $\mu$m, and the nickel layer (13) has a thickness of 4 $\mu$m to 20 $\mu$m.

9.  The conductive sheet (10) according to claim 7 or 8, wherein the copper layer (12) and the nickel layer (13) are applied on the conductive sheet body (20) through electroplating.

10. The conductive sheet (10) according to any one of claims 7 to 9, wherein the nickel layer (13) has a conductivity percentage greater than 58% and a peel strength of 30 N/mm.

11. The conductive sheet (10) according to any one of claims 7 to 10, wherein the surface of the conductive sheet body (20) further comprises an insulating coating (14), and the insulating coating (14) is located on a surface of the nickel layer (13) that faces away from the conductive sheet body (20).

12. The conductive sheet (10) according to claim 11, wherein a thickness of the insulating coating (14) is 0.2 mm to 0.7 mm.

13. The conductive sheet (10) according to any one of claims 1 to 12, wherein the conductive sheet body (20) is selected from one or more of aluminum, aluminum alloy, magnesium, magnesium alloy, iron, ferroalloy, nickel, or nickel alloy.

14. The conductive sheet (10) according to any one of claims 1 to 13, wherein the conductive sheet body (20) comprises the following components in mass percentages:
Mg: 0.02% to 0.85%; Si: 0.01% to 0.41%; B: 0.01% to 0.04%; Fe: 0.01% to 0.062%; Zn: 0 to 0.0096%; Ti: 0 to 0.0096%; V: 0 to 0.001%; Al: 98.52% to 99.95%; and other elements: less than 0.1%.

15. A conductive strip (30), obtained by bending the conductive sheet (10) according to any one of claims 1 to 14.

16. An electrical connector for a vehicle, comprising:
one or more conductive strips (30) according to claim 15, configured for connection between electrical devices inside the vehicle.

10

11

1

21

20

3

I — — — — — — — — — — — — — — — I'

2

41

4

42

FIG. 1

30

3

4

2

1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

## INTERNATIONAL SEARCH REPORT

| International application No. |
| --- |
| **PCT/CN2022/143231** |

**A. CLASSIFICATION OF SUBJECT MATTER**

H01B 5/02(2006.01)i;H01R 25/16(2006.01)i;B60L 50/64(2019.01)i;H01B 1/02(2006.01)i

According to International Patent Classification (IPC) or to both national classification and IPC

**B. FIELDS SEARCHED**

Minimum documentation searched (classification system followed by classification symbols)

IPC:H01B,H01R,B60L

Documentation searched other than minimum documentation to the extent that such documents are included in the fields searched

Electronic data base consulted during the international search (name of data base and, where practicable, search terms used)

CNABS, CNTXT, VEN, WOTXT, EPTXT, USTXT, CNKI, IEEE: 导电片, 导电排, 扁平, 带状, 宽度, 厚度, 导电率, conductive, sheet, row, flat, ribbon, width, thickness, conductivity

**C. DOCUMENTS CONSIDERED TO BE RELEVANT**

| Category* | Citation of document, with indication, where appropriate, of the relevant passages | Relevant to claim No. |
| --- | --- | --- |
| A | CN 212991242 U (HANGZHOU HUAXUN TECHNOLOGY CO., LTD.) 16 April 2021 (2021-04-16)<br>  description, paragraphs 0021-0026, and figures 1-3 | 1-16 |
| A | CN 101515487 A (SHENYANG UNIVERSITY OF TECHNOLOGY) 26 August 2009 (2009-08-26)<br>  entire document | 1-16 |
| A | CN 208706911 U (SUZHOU ZHONGNENG MEDICAL TECHNOLOGY CO., LTD.) 05 April 2019 (2019-04-05)<br>  entire document | 1-16 |
| A | CN 206271907 U (SHENZHEN BUSBAR SCI-TECH DEVELOPMENT CO., LTD.) 20 June 2017 (2017-06-20)<br>  entire document | 1-16 |
| A | CN 101241778 A (UNIVERSITY OF SCIENCE AND TECHNOLOGY BEIJING) 13 August 2008 (2008-08-13)<br>  entire document | 1-16 |

☑ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **28 January 2023** | **15 February 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

## INTERNATIONAL SEARCH REPORT

International application No.

**PCT/CN2022/143231**

**C.    DOCUMENTS CONSIDERED TO BE RELEVANT**

| Category* | Citation of document, with indication, where appropriate, of the relevant passages | Relevant to claim No. |
|---|---|---|
| A | US 2020366027 A1 (NINGBO LUOKEXIN AUTO PARTS CO.) 19 November 2020 (2020-11-19)<br>    entire document | 1-16 |

Form PCT/ISA/210 (second sheet) (July 2022)

**INTERNATIONAL SEARCH REPORT**
Information on patent family members

International application No.

**PCT/CN2022/143231**

| Patent document cited in search report | | | Publication date (day/month/year) | Patent family member(s) | | | Publication date (day/month/year) |
|---|---|---|---|---|---|---|---|
| CN | 212991242 | U | 16 April 2021 | None | | | |
| CN | 101515487 | A | 26 August 2009 | CN | 101515487 | B | 07 March 2012 |
| CN | 208706911 | U | 05 April 2019 | None | | | |
| CN | 206271907 | U | 20 June 2017 | None | | | |
| CN | 101241778 | A | 13 August 2008 | CN | 101241778 | B | 08 December 2010 |
| US | 2020366027 | A1 | 19 November 2020 | US | 11152743 | B2 | 19 November 2020 |
| | | | | CN | 110034455 | A | 19 July 2019 |
| | | | | CN | 209730309 | U | 03 December 2019 |

Form PCT/ISA/210 (patent family annex) (July 2022)

# REFERENCES CITED IN THE DESCRIPTION

**Patent documents cited in the description**

- CN 202111675703